# EUROPEAN PATENT SPECIFICATION

(11) **EP 3 822 174 B1**
(45) Date of publication and mention of the grant of the patent: **19.07.2023**
(21) Application number: 19859276.8
(22) Date of filing: 12.09.2019
(51) Int. Cl.: B64U 70/70

(54) **LAUNCHER CATAPULT TRACK DEVICE**
KATAPULTGLEITVORRICHTUNG ALS STARTVORRICHTUNG
DISPOSITIF DE VOIE D'ÉJECTION POUR LANCEUR DE CATAPULTE

(30) Priority: 14.09.2018 CN 201811075299
(43) Date of publication of application: 19.05.2021
(73) Proprietor: Qihang Launching Tech Co., Ltd., Qingdao, Shandong 266300 (CN)
(72) Inventor: BI, Hejun, Qingdao, Shandong 266300 (CN)
(74) Representative: Ipey
(86) International application number: PCT/CN2019/105504
(87) International publication number: WO 2020/052612

(56) References cited:
- CN-A- 104 015 933
- CN-A- 106 394 924
- CN-A- 107 933 947
- CN-A- 109 018 418
- CN-B- 104 015 933
- CN-U- 204 776 065
- CN-U- 209 080 185
- US-A1- 2016 347 477
- US-A1- 2017 297 740
- US-B1- 7 210 654

## Description

### Technical Field

The invention relates to the field of unmanned aerial vehicle launching, and in particular to an ejection track device for a launcher.

### Background

There are many means for unmanned aerial vehicles to take off, including taxi, on-plate vehicle, airdrop, hand throw, rocket boost, catapult takeoff or the like. Catapult takeoff is currently the mainstream of research at home and abroad. Catapult takeoff is not restricted by factors such as environment and runway, and can take off anytime and anywhere, with wide applicability.

US 2017/297740 discloses a catapult, which comprises a carriage for fastening an aircraft. The carriage is supported on a ramp. The ramp is formed of one or more ramp elements. The ramp element comprises four frame plates, namely two parallel side plates, a top plate and a bottom plate. The frame plates are separate pieces which are connected at fastening points to each other by means of mechanical fastening elements.

CN 107 933 947 discloses a small unmanned aerial vehicle launching vehicle comprising a launching platform, a supporting column and a launching base. Two wheels are arranged at the bottom of the launching base. The supporting column is perpendicularly and fixedly connected to the upper surface of the launching base. A hydraulic station is arranged on the launching base. The length direction of the launching platform is the left-right direction. The bottom of the rear side of the launching platform is hinged to the upper end of the supporting column. A lifting oil cylinder is arranged between the bottom end of the right side of the launching platform and the launching base. A launching propelling device is arranged on the launching platform. A driving device is arranged on the launching base. The hydraulic station is connected with the lifting oil cylinder, the driving device and the launching propelling device through oil pipes respectively. The small unmanned aerial vehicle launching vehicle has the advantages of being reasonable in design, easy and convenient to operate, high in safety, high in launching reliability, high in stability and the like.

CN 104 015 933 discloses a foldable unmanned aerial vehicle ejection recovery device, comprising a base, a folding beam, an ejection frame, an ejection cylinder, a traction cable, a hoisting roller and a pulley block; the end of the folding beam is hinged with the base, and the ejection cylinder is fixed at the end of the inner cavity of the folding beam; the two hoisting drums are arranged at the end of the folding beam; the two ends of the traction cable connected with the ejection frame are respectively along the traction route formed by the pulley block. Winding connection with two hoisting drums are provided.

After the invention is folded, it is easy to store and conceal, convenient to carry and transport, and after unfolding, the slideway is long, the ejection force is large, the controllability is strong, the ejection and recovery are integrated, and the cross operation of ejection and recovery can be carried out quickly and continuously. It is suitable for all maneuvering modes such as shipborne and vehicle-mounted, and the low-power fuel engine or motor can maintain operation without other guarantees.

US 2016/347477 discloses a launching system for an unmanned aerial vehicle (UAV), the disclosed launching system eliminates the use of hydraulic fluid and compressed nitrogen or air by providing an electric motor-driven tape that causes movement of a shuttle along a launcher rail. The shuttle is detachable from the motor-driven tape, such that stoppage of the tape can be separate from stoppage of the shuttle. Embodiments further provide a secondary arrestment strap. Further embodiments provide an anti-rollback latch system.

At present, for large-scale ejection devices, due to the large orbit length and the high launch speed, and affected by wind, vibration and other factors, even a slight swing may cause the aircraft to deform and unbalance its off-orbit movement, and the interference with the aircraft caused by severe swing may cause flight and operation accidents. Moreover, during the launching operation of the aircraft, its own shock and vibration will cause the launch track to swing, and the carrying chassis and on-plate vehicle may have the possibility of aggravating the swinging action. Therefore, the stability against the swinging is extremely important for ejection track.

In order to improve the anti-swinging performance, the current stabilization measure for the ejection track is to use two parallel tracks extending upward with "C" cross-sections and with opposite openings on the load-bearing chassis, and parallel sliding frames provided below the track and inserted into the "C"-shaped track installed below the load-bearing chassis, and the stability of the track is enhanced by the "C"-shaped track to limit the left and right positions and slide up and down of the parallel sliding frames. The above structure is relatively heavy, and as the erection height increases, the anti-swinging ability is greatly reduced.

On the other hand, the current launching frame only has pulleys at the front portion of the track to pull the trolley through the traction cable for forward ejection movement, and a hydraulic damping buffer device or an elastic damping cable is arranged at the front portion of the track to buffer the trolley to stop at the end of the ejection stroke. This buffering to stop method will inevitably cause the trolley to have a strong impact on the track and the launch system at the end of the launch stroke. The angular velocity produced by the impact and the interference caused by it are harmful to the off-orbit of the aircraft. Moreover, the current buffer damping method does not have adjustment and adaptation functions, has relatively low stability and reliability and is only suitable for small, low-speed launch systems with light weight and relatively low end impact energy. In addition, the traction trolley also needs to be mounted with a winch or manually pulled backwards to achieve reset.

In addition, since the current ejection track device does not have a measuring mechanism, in order to obtain the movement data of the trolley and the UAV during the ejection process, only high-speed cameras, wireless sensors and other additional devices can be used for measurement and control. Thereby, the system has a high cost and is more complicated to operate.

### Summary

The technical problem to be solved by the present invention is how to overcome the deficiencies of the prior art and provide an ejection track device for a launcher, which has the characteristics of light weight, high structural rigidity, impact resistance, convenient use and operation, advanced technology, easy measurement and control, stability and reliability, and convenient industrial batch manufacturing.

In accordance with the present invention, there is provided an ejector track device for a launcher, comprising
a base and
a track located on the base,
wherein the track is either a single section track or formed by assembling a plurality sections of tracks, wherein the plurality of tracks are connected in an end-to-end hinged mode so as to be folded and stored in a lateral direction or a vertical direction of a track plane;
a cable pulley is provided at each hinged position of the track;
the track is formed by insertedly connecting an upper plate, a lower plate, a left plate and a right plate by means of welding,
the upper plate, the lower plate, the left plate and the right plate are provided with perforations and edge protrusions for splicing, and the perforations and the protrusions are positioned so that individual plates are insertedly assembled through the protrusions and the perforations and are fixed by means of welding;
the track further includes rib plates which are vertically or obliquely provided between said upper plate, said lower plate, said left plate and said right plate, and the rib plates are also insertedly connected with the surrounding individual plates through the perforations and the edge protrusions and are fixed by means of welding;
upper ends of the left plate and the right plate are provided with slide rails which are also insertedly connected with the left plate and the right plate through the perforations and the edge protrusions and are fixed by means of welding;
the left plate and the right plate are provided in parallel,
the upper plate and the lower plate are provided in parallel or non-parallel, and
the rib plates are provided perpendicularly or diagonally to the surrounding plates;
the upper plate, the lower plate, the left plate, the right plate and the rib plates are all provided with weight-reducing holes;
front and rear ends of the track are each provided with at least one cable pulley, and
the cable pulleys are configured to set a traction cable;
a rear portion of the track is hinged to the base,
the ejector track device further comprises a lifting hydraulic cylinder;
characterised in that
a pair of balance hydraulic cylinders are coaxially hinged to two sides of a front portion of the track by a hinge shaft, and the other ends of the pair of balance hydraulic cylinders are also coaxially hinged to two sides of the base;
the pair of balance hydraulic cylinders have the same structure and are provided symmetrically;
oil cylinders of the pair of balance hydraulic cylinders are connected through hydraulic pipes; and
a closed oil circuit is formed between the pair of balance hydraulic cylinders;
   and in that
the lifting hydraulic cylinder is located between the pair of balance hydraulic cylinders, two ends of the lifting hydraulic cylinder are hinged to the track and the base respectively, the lifting hydraulic cylinder itself maintains a rigid vertical articulation with a hinge shaft; and the hinge shaft of the lifting hydraulic cylinder coaxial or parallel to the hinge shaft of the pair of balance hydraulic cylinders.

In one embodiment, the perforations and the edge protrusions on the track which are used for insertedly connecting the plates, are welded and fixed by means of spot welding and short welding, and wherein the resulting welding positions are isolated from each other.

In one embodiment, an upper middle layer plate and a lower middle layer plate are also installed between the upper plate and the lower plate of the track; the upper middle layer plate and the lower middle layer plate are perpendicular to the left plate and the right plate, and are provided along the extending direction of the upper plate and the lower plate; the upper middle layer plate and the lower middle layer plate together with the surrounding plates are also spliced through the perforations and the edge protrusions, and are fixed by means of welding.

In one embodiment, the rib plates are perpendicular to the left plate and the right plate.

In one embodiment, the rib plates are also provided between the upper plate, the upper middle layer plate, the left plate and the right plate and are perpendicular to each of the surrounding plates; the rib plates are also provided between the lower middle layer plate, the lower plate, the left plate and the right plate and are perpendicular to each of the surrounding plates; the rib plates are also provided between the left plate, the right plate, the lower middle layer plate and the lower plate and are perpendicular to the left plate and the right plate, and are connected to the lower middle layer plate and the lower plate obliquely by means of welding.

In one embodiment, the track may be a main track, or may be a main track, a sub-track I and/or a sub-track II, or may be a main track, a sub-track I and/or a sub-track II, a sub-track III and/or a sub-track IV; the sub-track I and the sub-track II are respectively hingedly connected to front and rear ends of the main track to realize lateral folding and storage of the sub-track I and the sub-track II in a main track plane; the sub-track III is hinged to the sub-track I to realize vertical folding and storage of the sub-track III around a hinge point; the sub-track IV is hinged to the sub-track II to realize the vertical folding and storage of the sub-track IV around the hinge point.

In one embodiment, the track is composed of the main track, the sub-track I and the sub-track II, the sub-track I and the sub-track II located at the front and rear ends of the main track respectively so as to realize reverse folding and storage in left and right directions of the main track plane by hinge connection, a rear portion of the main track in the middle is hinged to the base, a front portion of the main track is hinged to the base through the pair of balance hydraulic cylinders and the lifting hydraulic cylinder.

In one embodiment, cylinder barrels or cylinder barrel extension members of the pair of balance hydraulic cylinders are hinged to left and right positions of the base, piston rods on upper ends of the pair of balance hydraulic cylinders are hinged to left and right sides of the track; a cylinder barrel or a cylinder barrel extension member of the lifting hydraulic cylinder is hinged to a middle position of the base, and a piston rod at an upper end of the lifting hydraulic cylinder is rigidly hinged to the track;
the pair of balance hydraulic cylinders are double rod hydraulic cylinders with equal cylinder diameters, piston diameters of the two cylinders and piston rod diameters front and behind the piston are the same, there are oil inlet holes and outlet holes in upper and lower portions of the cylinder barrels of the pair of balance hydraulic cylinders, the oil holes in the lower portion of the two oil cylinders are connected with the oil holes in the upper portion of the opposite oil cylinder through hydraulic pipes to form a closed oil circuit, and the pair of balance hydraulic cylinders do synchronous movement.

In one embodiment, a sensor is provided on the track.

In one embodiment, the sensor is a rotary digital encoder, and a rotation shaft of the encoder is synchronized with a cable pulley at a rear portion of the track, or synchronized with a traction cable by arranging an additional pulley at the rear portion of the track.

The advantages of the present invention are:
(1) The upper, lower, left and right plates and the rib plates are assembled by insertedly connecting and aligning, and are welded and fixed at the perforation portions for insertedly connecting, and each plate forms a self-positioning and self-setting integral structure that supports each other and restricts each other. In the welding process, the position of the thin plate structure will not move, which can ensure the shape and position accuracy of the track structure, and facilitate rapid and mass production.

The plates are mutually rigidly supported and rigidly limited, and the welding process of spot welding and short welding is adopted to ensure that the track structure can achieve the smallest amount of deformation and has good linearity.

Multi-layer and multi-angle thin plate structural members are used for insertedly connecting to assemble. Since each plate has prefabricated holes and other weight-reducing structural features, and the welding positions are in the perforation areas, the combined track is not only easy to weld and construct, but also has extremely high overall stiffness, and to maximize the lightweight structure;
(2) The pulleys are provided in the front and rear of the track: a front pulley and a rear pulley, wherein the front pulley is mainly used to pull the trolley to form ejection acceleration during the ejection process, and the rear pulley is mainly used to pull the trolley for decelerating to stop and resetting;
(3) The balance cylinder stabilization system has a simple structure, light weight, high overall rigidity, simple use and maintenance, and its anti-swinging stability is not affected by height, ensuring the stability of the entire device;
(4) The problem of measurement and control of the motion parameters of the unmanned aerial vehicle is conveniently solved by setting up a data sensor-encoder inside the track, and the cost of measurement and control is greatly reduced.

The design of the present invention is scientific and reasonable, light weight, high structural rigidity, convenient use and operation, advanced technology, easy to measure and control, stable and reliable, and convenient for industrialized batch manufacturing, and the present application is a technical revolution to the field, a great progress in the field and has important significance.

### Brief Description of the Drawings

The present invention will be further described below with reference to the drawings and embodiments.
FIG. 1 is a schematic structural diagram of an ejector track device for a launcher according to the present invention;
FIG. 2 is a schematic diagram of a traction cable of the ejector track device for the launcher according to the present invention;
FIG. 3 is a schematic diagram of the spliced assembly structure of the upper plate 21, the lower plate 22, the left plate 23, the right plate 24, and the rib plates 27 in the track 2 of the present invention;
FIG. 4 is a partial enlarged schematic diagram of A in FIG. 3;
FIG. 5 is a partial enlarged schematic diagram of B in FIG. 3;
FIG. 6 is a schematic diagram of the installation structure of the rib plates 27 in the track b or c according to the present invention;
FIG. 7 is a schematic diagram of the installation structure of the rib plates 27 in the track a of the present invention;
FIG. 8 is a schematic diagram of the installation structure of the cable pulley 3 in the track a of the present invention;
FIG. 9 is a schematic diagram of the transverse hinge structure in the ejection track device of the present invention;
FIG. 10 is a partial enlarged schematic diagram of A in FIG. 9;
FIG. 11 is a schematic diagram of coaxial articulation of a pair of balance hydraulic cylinders 5 and a lifting hydraulic cylinder 6;
FIG. 12 is a schematic diagram of the structure of the slide rails 25 in the ejection track device of the present invention;
FIG. 13 is a schematic structural diagram of the base 1 of the present invention;
FIG. 14 is a schematic diagram of the oil pipe connection of a pair of balanced hydraulic cylinders 5 of the present invention;
FIG. 15 is a schematic structural diagram of another ejector track device for an launcher according to the present invention;

In the figures, 1-base, 2-track, 3-cable pulley, 3 1-upper cable pulley, 32-lower cable pulley, 4-pulley, 41-front pulley, 42-rear pulley, 5-a pair balance hydraulic cylinder, 51- hydraulic connecting line, 6-lifting hydraulic cylinder, b-sub-track I, a-main track, c-sub-track II, d-sub-track III, e-sub-track IV, 21-upper plate, 22-Lower plate, 23-left plate, 24-right plate, 211-upper middle layer plate, 212-lower middle layer plate, 25-slide rail, 26-traction trolley, 27-rib plate, 28-traction cable, b1-upper rib plate, b2-lower rib plate, 11-elongated structural member, 12-base transverse structure I, 13-base transverse structure II, 14-column, 15-reinforcement, 16-stabilizing support frame, 7-pulley connected with rotation shaft of an encoder, 8-weight-reducing holes.

### Detailed Description of the Embodiments

Hereinafter, referring to the drawings, an ejection track device for a launcher according to the present invention will be described in detail.

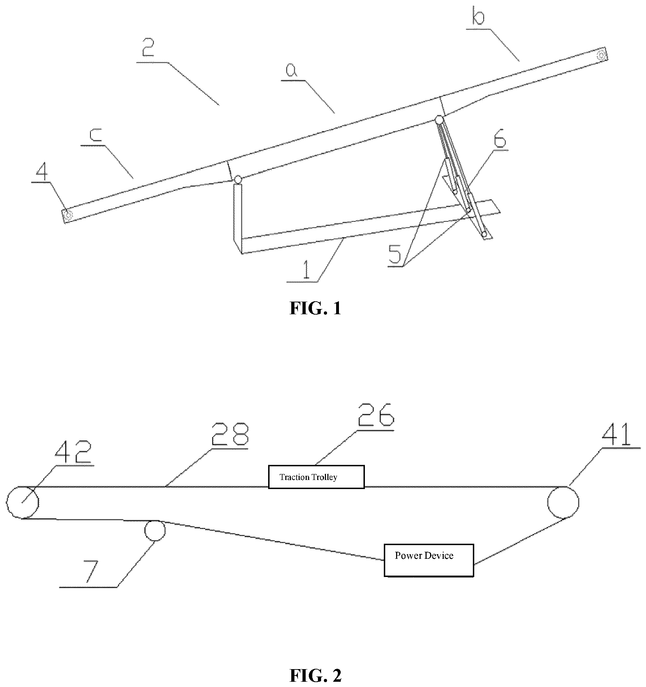

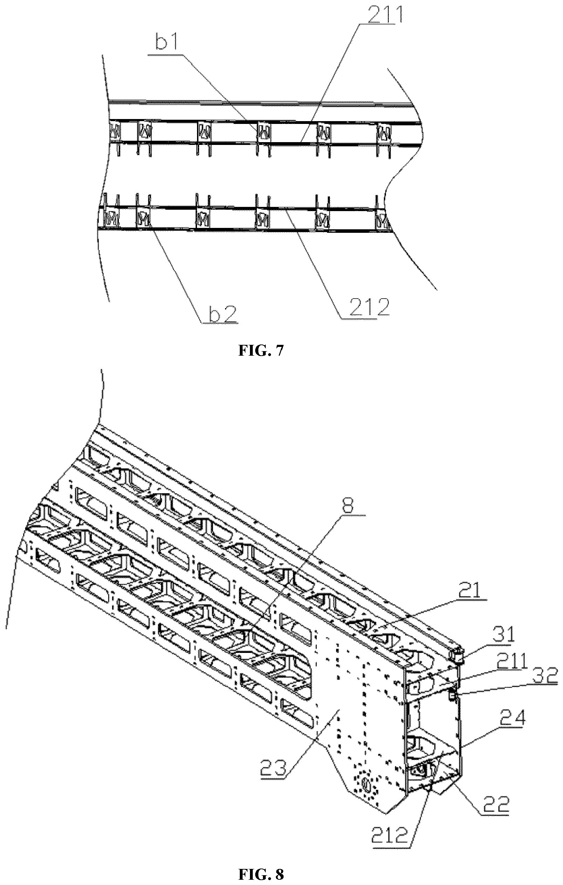

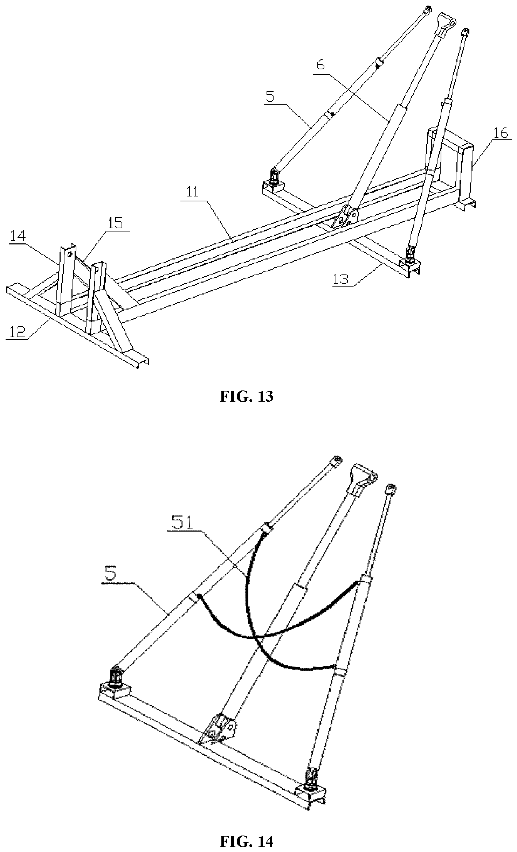

As shown in FIGS. 1-14, an ejection track device for a launcher includes a base 1 and a track 2 located on the base 1. The track 2 in this embodiment is composed of three tracks, which are a sub-track I b and a main track a, and a sub-track II c, wherein the rear end of the sub-track I b and the front end of the main track a are connected together by a hinge.

More specifically, the right rear end of the sub-track I b and the right front end of the main track a are connected together by a hinge. The above structure realizes that the sub-track I b can be bent and folded to the right, and the folding effect the sub-track I b is parallel to the main track a to achieve the purpose of storage. The left rear end of the main track and the left front end of the sub-track II c are connected together by a hinge, so that the sub-track II c is bent to the left and folded on the left side of the main track a in parallel, thereby realizing the storage of the sub-track II c.

The traction trolley will reciprocate on the track 2 described above. In the present invention, the traction trolley 26 is pulled by the front and rear traction cables 28 for reciprocating motion. In order to protect the traction cable 28 from being cut or worn by the structural members of the track 2 during the above-mentioned folding process, each of the hinged positions of the sub-track I b, the main track a, and the sub-track II c is provided a cable pulley 3. Specifically, the cable pulley 3 includes an upper cable pulley 31 and a lower cable pulley 32. The upper cable pulley 31 and the lower cable pulley 32 are provided as a group, which are respectively used to protect two reciprocating sections of the traction cable running through the pulleys. The cable pulleys 3 are respectively installed at the left and right front ends of the main track a, the right rear end of the sub-track I b, and the left front end of the sub-track II c. That is, the cable pulleys 3 are installed at each hinged connection part of the main track a, sub-track I b, and sub-track II c. When the sub-track I b and sub-track II c are folded laterally, the traction cable 28 used to pull the traction trolley will also be bent with the change of the structure. In order to prevent cuts or wear during bending, the cable pulley 3 at the hinge supports the traction cable 28 to avoid contact with the track itself, even when the traction cable has a certain tension, the traction cable 28 is allowed to be pulled back and forth, thereby protecting the traction cable.

In order to ensure the reciprocating movement of the traction trolley, pulleys 4 are provided at the front and rear ends of the track 2, specifically 41-front pulley and 42-rear pulley. Specifically, the pulleys are installed at the two ends of sub-track I b and sub-track II c, a traction cable 28 can be installed in the pulley 4, the traction trolley is connected and fixed on the traction cable 28, and the traction cable 28 is externally connected to the power device. In the present invention, the traction cable is configured to pull the trolley through the front pulley 41 to form ejection acceleration during the ejection process, and the traction cable 28 is used to decelerate to stop the trolley through the rear pulley 42 and reset the trolley backward.

The invention changes the traditional damping buffer device and avoids the impact damage to the front of the launch frame caused by the impact of the trolley at the end of the launch stroke. Furthermore, the traction trolley 26 is buffered and stopped by the traction cable 28 and the rear pulley 42 to facilitate the absorption and adaptive adjustment of the different impact energy of the traction trolley. The traction cable 28 can also realize the traction reset of the traction trolley 26 through the rear pulley 42.

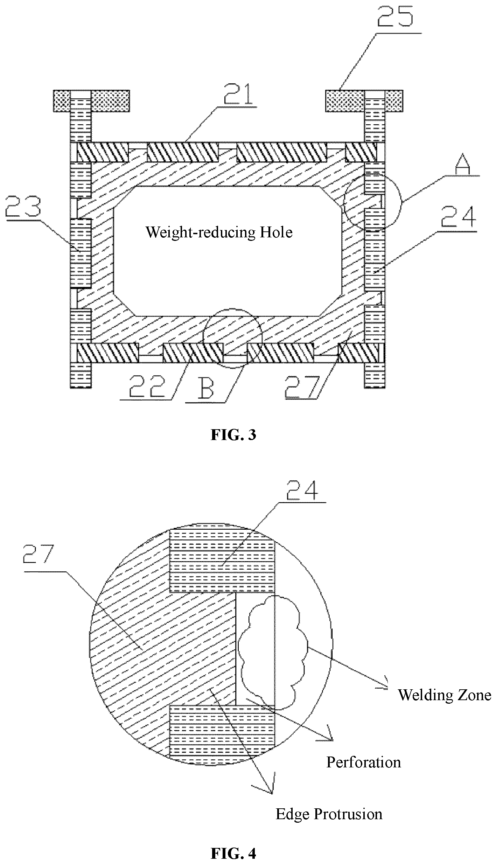

As shown in FIGS. 3-5, the specific structure of track 2 is further explained below.

The track 2 is formed by splicing an upper plate 21, a lower plate 22, a left plate 23, and a right plate 24 with the aid of welding. Specifically, the upper plate 21, the lower plate 22, the left plate 23, and the right plate 24 are provided with a number of edge protrusions and perforations for splicing, and these protrusions and perforations are positioned. The above plates are accurately positioned, shaped and structurally supported by the insertion of the respective protrusion and perforation. The plates are welded to each other through the positioning connection of the perforations and protrusions, and the other connecting portions are supplemented with solder joint for reinforcement. All welding uses spot welding and short welding methods, and the welding positions are isolated from each other. The left plate 23 and the right plate 24 are arranged in parallel, and the upper plate 21 and the lower plate 22 are also arranged in parallel. The slide rails 25 are respectively mounted at the upper ends of the left plate 23 and right plate 24. The slide rails 25 are also spliced together with the left plate 23 and right plate 24 through the protrusions and the perforations and are fixed with the aid of welding. The slide rails 25 are used for bearing, guiding and limiting the movement of the traction trolley 26.

An upper middle layer plate 211 and a lower middle layer plate 212 are also installed between the upper plate 21 and the lower plate 22 of the main track a. The upper middle layer plate 211 and the lower middle layer plate 212 are perpendicular to the left plate 23 and the right plate 24, and are arranged along the upper plate 21 and the lower plate 22. The upper middle layer plate 211 and the lower middle layer plate 212 are parallel to the upper plate 21 or the lower plate 22. The upper middle layer plate 211 and the lower middle layer plate 212 are also spliced together with the surrounding plates through the protrusions and the perforations and are fixed with the aid of welding.

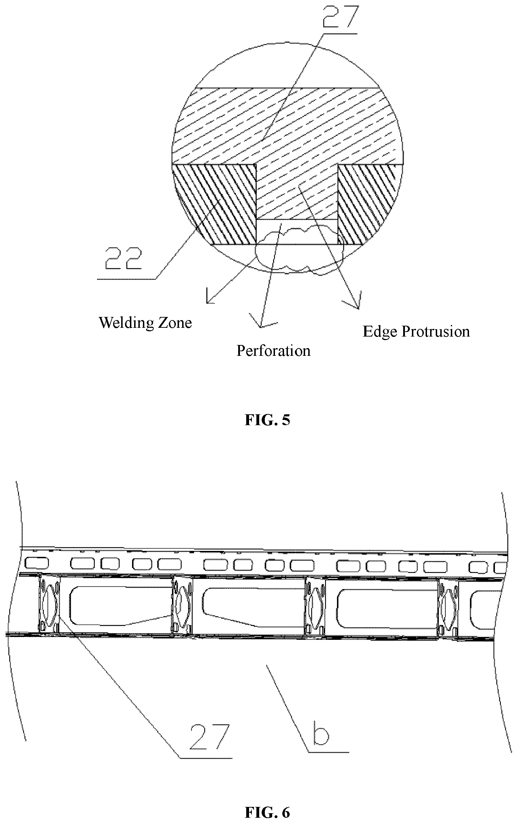

In addition, a number of rib plates 27 are provided in the middle of the upper plate 21, the lower plate 22, the left plate 23, and the right plate 24. The rib plates 27 are also spliced together with the surrounding plates through the protrusions and the perforations and are fixed with the aid of welding. Furthermore, the rib plates 27 are arranged perpendicularly or crossing the surrounding plates. As shown in FIGS. 6-7, the embodiments of the rib plates 27 are also divided into two situations. The first situation: the rib plates inside the main track a include an upper rib plate b1 and a lower rib plate b2. These two rib plates are installed correspondingly up and down, and the lower edge protrusion of the upper rib plate b1 and the upper edge protrusion of the lower rib plate b2 are passed through the prefabricated openings of the upper middle layer plate 211 and the lower middle layer plate 212 and fixed by welding. In the second situation: a number of rib plates 27 are directly arranged between the upper plate 21, the lower plate 22, the left plate 23, and the right plate 24 in the sub-track I b and the sub-track II c. The rib plates 27, the upper rib plate b1, and the lower rib plate b2 are provided at a certain distance. An oblique rib plate is also provided between the left plate 23 and the right plate 24, and the oblique rib plate is perpendicular to the left plate 23 and the right plate 24, but not perpendicular to the upper plate 21 and the lower plate 22. The oblique rib plate is also spliced together with the left plate 23 and the right plate 24 through the protrusions and the perforations, and are fixed with the aid of welding.

The upper plate 21, the lower plate 22, the left plate 23, the right plate 24, and the rib plates 27 are also provided with the weight-reducing holes, screw rods, screw holes, connectors, etc., and the weight-reducing holes 8 are evenly provided at a certain distance, and different opening shapes and sizes are set according to different parts and bearing requirements. The screw rods, screw holes, and connectors are used for the installation for the subsequent components.

Regarding the installation and connection of the track 2 and the base 1, a detailed description will be provided below.

In this embodiment, the base 1 is specifically composed of two elongated structural members 11 with the same length and arranged in parallel, and a base transverse structural member I 12 is provided at a rear end of the elongated structural member 11 and a base transverse structural member II 13 is provided at a middle front section of the elongated structural member 11. Further, a column 14 is provided at a rear end of the elongated structural member 11, and the column 14 is respectively provided at the ends of the two elongated structural members 11. A reinforcement 15 for reinforcement is also provided between the column 14 and the base elongated structural member 11 and the horizontal structural member 12. A stable support frame 16 with the track returning to a flat state is provided at the other end of the elongated structural member 11 to support the track.

For the above base 1, the installation method of track 2 is as follows:
The track 2 in this embodiment includes a sub-track I b, a main track a, and a sub-track II c, wherein the rear portion of the main track a is hingedly mounted on the column 14 of the base, and the track a can rotate around the hinge point, and finally the front portion of the track a rotates up and down.

A pair of balance hydraulic cylinders 5 are coaxially hinged on both sides of the front portion of the main track a. The other ends of the pair of balance hydraulic cylinders 5 are respectively hinged on the left and right positions of the base transverse structural member II 13. The base transverse structural member II 13, the pair of balance hydraulic cylinders 5 and the hinge shaft located above the balance hydraulic cylinders form an isosceles trapezoid structure. Specifically, the cylinder barrels of the pair of balance hydraulic cylinders 5 are hinged on the left and right sides of the base transverse structural member 13, and the piston rods of the upper ends of the pair of balance hydraulic cylinders 5 are hinged on the left and right sides of the track a.

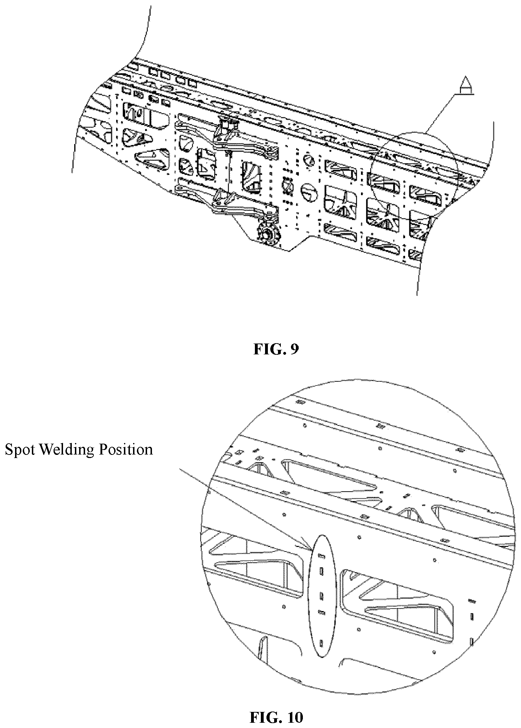

Important notes: the pair of balanced hydraulic cylinders 5 have the same structure and are arranged symmetrically. The pair of balance hydraulic cylinders 5 are double rod hydraulic cylinders with equal cylinder diameters. The piston diameters of the two cylinders and the piston rod diameters front and behind the piston are the same. The upper and lower portions of the pair of balance hydraulic cylinders 5 have oil inlet and outlet holes, wherein the oil holes in the lower portion of each cylinder are connected with the oil holes in the upper portion of the other cylinder through a hydraulic pipe. A closed circulating oil circuit is formed between the two cylinders, and the pair of balance hydraulic cylinders 5 realize the synchronous movement. As shown in FIG. 10, the black bold line is a schematic diagram of the connection of the hydraulic pipe line 51.

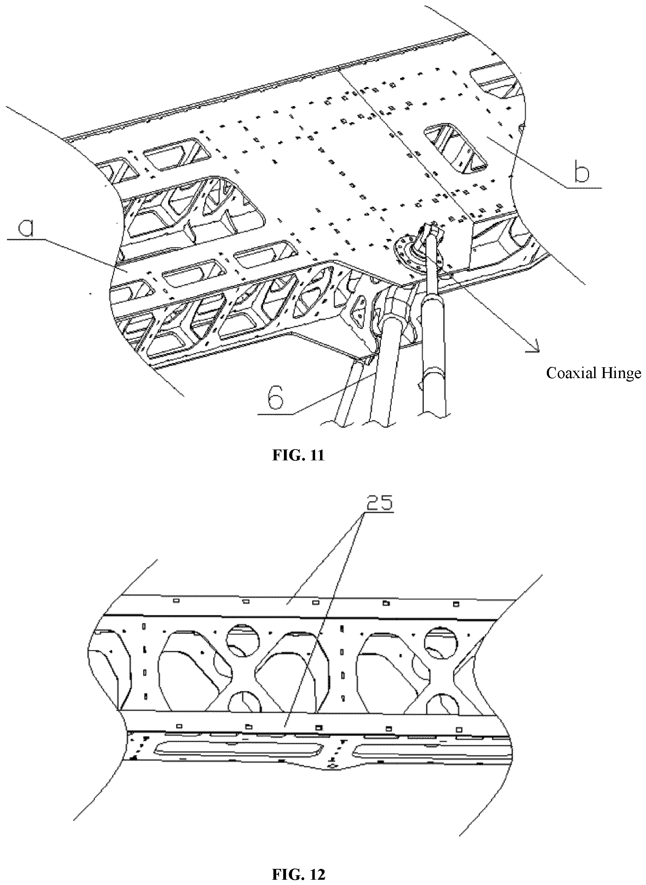

In order to realize the ascending and descending processes of the track 2, a lifting hydraulic cylinder 6 is also provided between the pair of balance hydraulic cylinders 5, and the piston rod at the upper end of the lifting hydraulic cylinder 6 is hinged to the front portion of the track a. The upper end of the lifting hydraulic cylinder 6 is coaxial with the hinge axis of the upper end of the pair of balance hydraulic cylinders 5, as shown in FIG. 11. The cylinder barrel of the lifting hydraulic cylinder 6 is hinged at the middle position of the beam II 13. Both the piston rod of the lifting hydraulic cylinder 6 and the upper hinge axis maintain a rigid vertical hinge connection.

The principle of using the balance hydraulic cylinders above is:
When the lifting hydraulic cylinder 6 performs the lifting action process, the pair of balance hydraulic cylinders 5 move together with the lifting hydraulic cylinder 6 and the track 2. Because the length and expansion and contraction amounts of the pair of balance hydraulic cylinders 5 are synchronously kept consistent, and the left and right sides are arranged in an equilateral trapezoid. Even if the track 2 swings slightly from side to side, the pair of balance hydraulic cylinders 5, which are the upper short sides of the equilateral trapezoid, will have a large angle change with the hinge axis of the track 2, thereby driving the track 2 to twist laterally at a large angle. Finally, a large angle swing of upper left and lower right, or upper left and upper right occurs, together with an upper coaxial or parallel hinge axis of the lifting hydraulic cylinder 6.

However, because the lifting hydraulic cylinder 6 maintains a vertical articulation with the hinge axis of the track 2 and has sufficient rigidity, the large angle twist of the track 2 and the reverse large angle swings of left and right ends of the upper coaxial or parallel hinge axis of the lifting hydraulic cylinder 6 can be formed only when the cylinder barrel or piston rod of the lifting hydraulic cylinder 6 allows a large amount of flexible bending. In this embodiment, the rigidity of the cylinder body of the lifting hydraulic cylinder 6 and the piston rod itself is sufficient to resist the above bending. Therefore, under the combined action of the pair of balancing hydraulic cylinders 5 and the lifting hydraulic cylinder 6, the track 2 produces a balance anti-swinging function. Moreover, the stabilization system of the pair of balance hydraulic cylinders 5 has a simple and lightweight structure, large overall rigidity, simple maintenance, and the anti-swinging stability ability is not affected by height.

The operation principle process is as follows:
When the present invention is in use, the track is raised to a predetermined angle by the lifting hydraulic cylinder 5, and the sub-track I b and the sub-track II c in the track are deployed in positions towards the left or right to form a long track 2 connected end to end.

During the above unfolding process of the track, the traction cable 28 can be under tension by the pulley 4 and the cable pulley 3, and is not scratched or worn by the edge of the track.

A traction trolley 26 is installed on the track 2, and a traction cable 28 is installed on the front and rear pulleys 4. The traction trolley is connected to the traction cable 28, and the traction cable 28 drags the traction trolley on the track 2 along the slide rails 25 to make a straight forward and backward motion. The above traction cable is powered by an external power device.

In order to obtain a proper ejection angle, the lifting hydraulic cylinder 6 can be adjusted so that the front portion of the track 2 rotates up and down around the rear hinge point to ensure that the track 2 obtains a proper ejection elevation angle. The above balance hydraulic cylinders 5 move synchronously with the lifting hydraulic cylinder, and ensures the balance and stability of the entire ejection device at any time during the adjustment process.

When the ejection and take-off of the UAV needs to be carried out, the power device provides power to the traction cable, and the traction cable pulls the trolley through the front pulley and the UAV loaded on the traction trolley runs with the trolley. When the traction trolley travels to the front portion of the track near the end, the traction cable will pull the trolley backward through the pulleys at the rear portion of the track, so as to realize the buffering and stopping of the trolley. Under the influence of inertia and engine power, the UAV will rush away. Finally, the traction cable, by the power device, resets the traction trolley through the pulley at the rear portion of the track.

With reference to FIG. 1, FIG. 7, and FIG. 15, a sensor, preferably a rotary digital encoder, can be provided on the rear portion of the main track a, on the sub-track II c, or on the sub-track IV e. A rotation shaft of the encoder is synchronized with the rear pulley 42 at the rear portion of the main track a, the sub-track II c, or the sub-track IV e. Alternatively, a rotation shaft of the encoder is synchronized with a traction cable at a rear portion of a traction trolley by providing a special pulley at the rear portion of the track, specifically the pulley 7 connected to the rotation shaft of the encoder. Therefore, whether it is a forward ejection operation, or a deceleration stop operation, or a backward reset operation, under the tension of the traction cable, the rotary encoder, the traction trolley, the rear traction cable, the pulley 42 at the rear portion of the track 2 or the specially set pulley 7 keep synchronous operation at any time. Therefore, the rotary encoder as a sensor can accurately detect and output various motion parameters of the trolley's forward and backward movement through its own rotation direction, rotation speed, and rate of change of rotation speed. The additional measurement and control system can easily and quickly provide various movement data and curves during the entire process of the aircraft ejection by collecting, calculating and analyzing these movement parameters. Since the movement of the unmanned aerial vehicle is completely synchronized and consistent with the trolley before its ejection and take-off off orbit, this detection method can simply and accurately obtain all the movement parameters of the aircraft's ejection and take-off process, which is economical and fast.

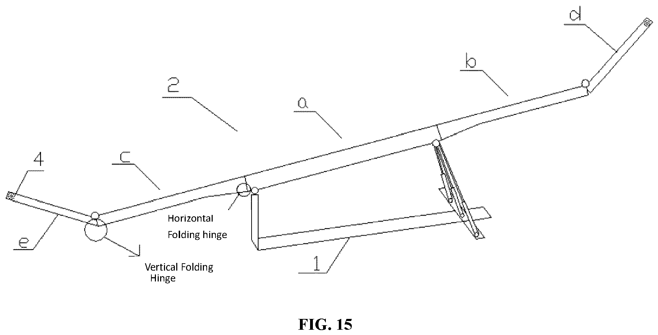

As shown in FIG. 15, another solution of the present invention is provided.

The track 2 includes a main track a, a sub-track I b, a sub-track II c, a sub-track III d, and a sub-track IV e. The sub-track I b and the sub-track II c are respectively hinged to the front and rear ends of main track a to realize the lateral folding and storage of the sub-track I b and sub-track II c on a plane of the main track a. The sub-track III d is hinged to the sub-track I b, so that the sub-track III d rotates vertically upward around the hinge axis to be folded and stored. The sub-track IV e is hinged to the sub-track II c, so that the sub-track IV e rotates vertically upward relative to the sub-track II c around the hinge axis to be folded and stored.

The above embodiments are only to illustrate the technical concept and characteristics of the present invention, and their purpose is to enable those of ordinary skill in the art to understand the contents of the present invention and implement them accordingly, and cannot limit the protection scope of the present invention.

## Claims

1. An ejector track device for a launcher, comprising
a base (1) and
a track (2) located on the base (1),
wherein the track (2) is either a single section track or formed by assembling a plurality sections of tracks (a, b, c), wherein the plurality of tracks (a, b, c) are connected in an end-to-end hinged mode so as to be folded and stored in a lateral direction or a vertical direction of a track plane;
a cable pulley (3) is provided at each hinged position of the track (2);
the track (2) is formed by insertedly connecting an upper plate (21), a lower plate (22), a left plate (23) and a right plate (24) by means of welding,
the upper plate (21), the lower plate (22), the left plate (23) and the right plate (24) are provided with perforations and edge protrusions for splicing, and the perforations and the protrusions are positioned so that individual plates are insertedly assembled through the protrusions and the perforations and are fixed by means of welding;
the track (2) further includes rib plates (27) which are vertically or obliquely provided between said upper plate (21), said lower plate (22), said left plate (23) and said right plate (24), and the rib plates (27) are also insertedly connected with the surrounding individual plates (21, 22, 23, 24) through the perforations and the edge protrusions and are fixed by means of welding;
upper ends of the left plate (23) and the right plate (24) are provided with slide rails (25) which are also insertedly connected with the left plate (23) and the right plate (24) through the perforations and the edge protrusions and are fixed by means of welding;
the left plate (23) and the right plate (24) are provided in parallel,
the upper plate (21) and the lower plate (22) are provided in parallel or non-parallel, and
the rib plates (27) are provided perpendicularly or diagonally to the surrounding plates;
the upper plate (21), the lower plate (22), the left plate (23), the right plate (24) and the rib plates (27) are all provided with weight-reducing holes;
front and rear ends of the track (2) are each provided with at least one cable pulley (3), and
the cable pulleys (3) are configured to set a traction cable (28);
a rear portion of the track (2) is hinged to the base (1),
the ejector track device further comprises a lifting hydraulic cylinder (6);
**characterised in that**
a pair of balance hydraulic cylinders (5) are coaxially hinged to two sides of a front portion of the track (2) by a hinge shaft, and the other ends of the pair of balance hydraulic cylinders (5) are also coaxially hinged to two sides of the base (1);
the pair of balance hydraulic cylinders (5) have the same structure and are provided symmetrically;
oil cylinders of the pair of balance hydraulic cylinders (5) are connected through hydraulic pipes; and
a closed oil circuit is formed between the pair of balance hydraulic cylinders (5);
and **in that**
the lifting hydraulic cylinder (6) is located between the pair of balance hydraulic cylinders (5), two ends of the lifting hydraulic cylinder (6) are hinged to the track (2) and the base (1) respectively, the lifting hydraulic cylinder (6) itself maintains a rigid vertical articulation with a hinge shaft; and the hinge shaft of the lifting hydraulic cylinder (6) coaxial or parallel to the hinge shaft of the pair of balance hydraulic cylinders (5).

2. The ejector track device according to claim 1, wherein the perforations and the edge protrusions on the track (2) which are used for insertedly connecting the plates, are welded and fixed by means of spot welding and short welding, and wherein the resulting welding positions are isolated from each other.

3. The ejector track device according to claim 1, wherein an upper middle layer plate (211) and a lower middle layer plate (212) are also installed between the upper plate (21) and the lower plate (22) of the track; the upper middle layer plate (211) and the lower middle layer plate (212) are perpendicular to the left plate (23) and the right plate (24), and are provided along the extending direction of the upper plate (21) and the lower plate (22); the upper middle layer plate (211) and the lower middle layer plate (212) together with the surrounding plates (21, 22, 23, 24) are also spliced through the perforations and the edge protrusions, and are fixed by means of welding.

4. The ejector track device according to claim 1, wherein the rib plates (27) are perpendicular to the left plate (23) and the right plate (24).

5. The ejector track device according to claim 3, wherein the rib plates (27) are also provided between the upper plate (21), the upper middle layer plate (211), the left plate (23) and the right plate (24) and are perpendicular to each of the surrounding plates (21, 22, 23, 24); the rib plates (27) are also provided between the lower middle layer plate (212), the lower plate (22), the left plate (23) and the right plate (24) and are perpendicular to each of the surrounding plates(21, 22, 23, 24); the rib plates (27) are also provided between the left plate (23), the right plate (24), the lower middle layer plate (212) and the lower plate (22) and are perpendicular to the left plate (23) and the right plate (24), and are connected to the lower middle layer plate (212) and the lower plate (22) obliquely by means of welding.

6. The ejector track device according to claim 1, wherein the track (2) may be a main track, or may be a main track (a), a sub-track I (b) and/or a sub-track II (c), or may be a main track (a), a sub-track I (b) and/or a sub-track II (c), a sub-track III (d) and/or a sub-track IV (e); the sub-track I (b) and the sub-track II (c) are respectively hingedly connected to front and rear ends of the main track (a) to realize lateral folding and storage of the sub-track I (b) and the sub-track II (c) in a main track plane; the sub-track III (c) is hinged to the sub-track I (b) to realize vertical folding and storage of the sub-track III (c) around a hinge point; the sub-track IV is hinged to the sub-track II (c) to realize the vertical folding and storage of the sub-track IV around the hinge point.

7. The ejector track device according to claim 6, wherein the track (2) is composed of the main track, the sub-track I (b) and the sub-track II (c), the sub-track I (b) and the sub-track II (c) located at the front and rear ends of the main track respectively so as to realize reverse folding and storage in left and right directions of the main track plane by hinge connection, a rear portion of the main track (a) in the middle is hinged to the base (1), a front portion of the main track (a) is hinged to the base (1) through the pair of balance hydraulic cylinders (5) and the lifting hydraulic cylinder (6).

8. The ejector track device according to claim 1, wherein cylinder barrels or cylinder barrel extension members of the pair of balance hydraulic cylinders (5) are hinged to left and right positions of the base (1), piston rods on upper ends of the pair of balance hydraulic cylinders (5) are hinged to left and right sides of the track; a cylinder barrel or a cylinder barrel extension member of the lifting hydraulic cylinder (5) is hinged to a middle position of the base (1), and a piston rod at an upper end of the lifting hydraulic cylinder (5) is rigidly hinged to the track (2);
the pair of balance hydraulic cylinders (5) are double rod hydraulic cylinders (5) with equal cylinder diameters, piston diameters of the two cylinders (5) and piston rod diameters front and behind the piston are the same, there are oil inlet holes and outlet holes in upper and lower portions of the cylinder barrels of the pair of balance hydraulic cylinders (5), the oil holes in the lower portion of the two oil cylinders (5) are connected with the oil holes in the upper portion of the opposite oil cylinder (5) through hydraulic pipes to form a closed oil circuit, and the pair of balance hydraulic cylinders (5) do synchronous movement.

9. The ejector track device according to any of claims 1, 6 or 7, wherein a sensor is provided on the track (2).

10. The ejector track device according to claim 9, wherein the sensor is a rotary digital encoder, and a rotation shaft of the encoder is synchronized with a cable pulley (42) at a rear portion of the track (2), or synchronized with a traction cable (28) by arranging an additional pulley at the rear portion of the track.

## Patentansprüche

1. Abwurfschienenvorrichtung für ein Abschussgeräte, umfassend:
eine Basis (1); und
eine Schiene (2), die sich auf die Basis (1) befindet,
wobei die Schiene (2) entweder eine einteilige Schiene ist oder durch Zusammenfügen einer Vielzahl von Schienenteilen (a, b, c) gebildet wird, wobei die Vielzahl von Schienenteilen (a, b, c) in einem Ende-an-Ende-Schamiermodus verbunden sind, um in einer seitlichen Richtung oder einer vertikalen Richtung einer Schienenebene gefaltet und gelagert zu werden;
wobei eine Seilrolle (3) an jeder Gelenkposition der Schiene (2) vorgesehen ist;
wobei die Schiene (2) durch steckbares Verbinden einer oberen Platte (21), einer unteren Platte (22), einer linken Platte (23) und einer rechten Platte (24) mittels Schweißen gebildet wird,
wobei die obere Platte (21), die untere Platte (22), die linke Platte (23) und die rechte Platte (24) mit Perforationen und Randvorsprüngen zum Verbinden versehen sind, und
wobei die Perforationen und die Randvorsprünge so positioniert sind, dass einzelne Platten durch die Randvorsprünge und die Perforationen zusammengefügt und durch Schweißen befestigt werden;
wobei die Schiene (2) ferner Rippenplatten (27) umfasst, die vertikal oder schräg zwischen der oberen Platte (21), der unteren Platte (22), der linken Platte (23) und der rechten Platte (24) vorgesehen sind, und wobei die Rippenplatten (27) auch steckbare mit den umgebenden einzelnen Platten (21, 22, 23, 24) durch die Perforationen und die Randvorsprünge verbunden und durch Schweißen befestigt sind;
wobei die oberen Enden der linken Platte (23) und der rechten Platte (24) mit Gleitbahnen (25) versehen sind, die ebenfalls durch die Perforationen und die Randvorsprünge steckbares mit der linken Platte (23) und der rechten Platte (24) verbunden sind und durch Schweißen befestigt werden;
wobei die linke Platte (23) und die rechte Platte (24) parallel zueinander angeordnet sind,
wobei die obere Platte (21) und die untere Platte (22) parallel oder nicht parallel zueinander angeordnet sind und die Rippenplatten (27) senkrecht oder diagonal zu den umgebenden Platten angeordnet sind; wobei die obere Platte (21), die untere Platte (22),
die linke Platte (23), die rechte Platte (24) und die Rippenplatten (27) alle mit gewichtsreduzierenden Löchern versehen sind;
wobei das vordere und das hintere Ende der Schiene (2) jeweils mit mindestens einer Seilrolle (3) versehen sind, und
wobei die Seilrollen (3) so konfiguriert sind, dass sie ein Zugseil (28) einstellen;
wobei ein hinterer Teil der Schiene (2) an der Basis (1) angelenkt ist, und
wobei die Abwurfschienenvorrichtung außerdem einen hydraulischen Hubzylinder (6) umfasst;
**dadurch gekennzeichnet, dass** ein Paar von hydraulischen Ausgleichszylindern (5) koaxial an zwei Seiten eines vorderen Teils der Schiene (2) durch eine Gelenkwelle angelenkt sind und die anderen Enden des Paares von hydraulischen Ausgleichszylindern (5) ebenfalls koaxial an zwei Seiten der Basis (1) angelenkt sind;
wobei das Paar von hydraulischen Ausgleichszylindern (5) den gleichen Aufbau hat und symmetrisch angeordnet ist;
wobei die Ölzylinder des Paares von hydraulischen Ausgleichszylindern (5) durch Hydraulikleitungen verbunden sind; und
wobei zwischen den beiden hydraulischen Ausgleichszylindern (5) ein geschlossener Ölkreislauf gebildet wird; und
dass der hydraulische Hubzylinder (6) zwischen dem Paar von hydraulischen Ausgleichszylindern (5) angeordnet ist, wobei zwei Enden des hydraulischen Hubzylinders (6) jeweils an der Schiene (2) bzw. der Basis (1) angelenkt sind, wobei der hydraulische Hubzylinder (6) selbst ein starres vertikales Gelenk mit einer Gelenkwelle aufrechterhält; und wobei die Gelenkwelle des hydraulischen Hubzylinders (6) koaxial oder parallel zu der Gelenkwelle des Paares von hydraulischen Ausgleichszylindern (5) ist.

2. Abwurfschienenvorrichtung nach Anspruch 1, wobei die Perforationen und die Kantenvorsprünge an der Schiene (2), die zur steckbaren Verbindung der Platten dienen, durch Punktschweißen und Kurzschweißen verschweißt und fixiert werden, wobei die entstehenden Schweißstellen voneinander isoliert sind.

3. Abwurfschienenvorrichtung nach Anspruch 1, wobei eine obere Mittelschichtplatte (211) und eine untere Mittelschichtplatte (212) ebenfalls zwischen der oberen Platte (21) und der unteren Platte (22) der Schiene installiert sind; wobei die obere Mittelschichtplatte (211) und die untere Mittelschichtplatte (212) senkrecht zu der linken Platte (23) und der rechten Platte (24) stehen und entlang der Erstreckungsrichtung der oberen Platte (21) und der unteren Platte (22) vorgesehen sind; wobei die obere Mittelschichtplatte (211) und die untere Mittelschichtplatte (212) zusammen mit den umgebenden Platten (21, 22, 23, 24) ebenfalls durch die Perforationen und die Randvorsprünge verbunden und durch Schweißen befestigt sind.

4. Abwurfschienenvorrichtung nach Anspruch 1, wobei die Rippenplatten (27) senkrecht zu der linken Platte (23) und der rechten Platte (24) stehen.

5. Abwurfschienenvorrichtung nach Anspruch 3, wobei die Rippenplatten (27) auch zwischen der oberen Platte (21), der oberen Mittelschichtplatte (211), der linken Platte (23) und der rechten Platte (24) vorgesehen sind und senkrecht zu jeder der umgebenden Platten (21, 22, 23, 24) verlaufen; wobei die Rippenplatten (27) auch zwischen der unteren Mittelschichtplatte (212), der unteren Platte (22), der linken Platte (23) und der rechten Platte (24) vorgesehen sind und senkrecht zu jeder der umgebenden Platten (21, 22, 23, 24) stehen; wobei die Rippenplatten (27) ebenfalls zwischen der linken Platte (23), der rechten Platte (24), der unteren Mittelschichtplatte (212) und der unteren Platte (22) vorgesehen sind und senkrecht zu der linken Platte (23) und der rechten Platte (24) stehen und mit der unteren Mittelschichtplatte (212) und der unteren Platte (22) durch Schweißen schräg verbunden sind.

6. Abwurfschienenvorrichtung nach Anspruch 1, wobei die Schiene (2) eine Hauptschiene sein kann oder eine Hauptschiene (a), eine Nebenschiene I (b) und/oder eine Nebenschiene II (c) sein kann oder eine Hauptschiene (a), eine Nebenschiene I (b) und/oder eine Nebenschiene II (c), eine Nebenschiene III (d) und/oder eine Nebenschiene IV (e) sein kann, wobei die Nebenschiene I (b) und die Nebenschiene II (c) jeweils gelenkig mit dem vorderen und hinteren Ende der Hauptschiene (a) verbunden sind, um eine seitliche Faltung und Lagerung der Nebenschiene I (b) und der Nebenschiene II (c) in einer Hauptschienenebene zu ermöglichen; wobei die Nebenschiene III (c) an der Nebenschiene I (b) angelenkt ist, um eine vertikale Faltung und Lagerung der Nebenschiene III (c) um einen Scharnierpunkt herum zu ermöglichen; wobei die Nebenschiene IV an der Nebenschiene II (c) angelenkt ist, um die vertikale Faltung und Lagerung der Nebenschiene IV um den Scharnierpunkt herum zu realisieren.

7. Abwurfschienenvorrichtung nach Anspruch 6, wobei die Schienen (2) aus der Hauptschiene, der Nebenschiene I (b) und der Nebenschiene II (c) besteht, wobei die Nebenschiene (b) und die Nebenschiene II (c) am vorderen bzw. hinteren Ende der Hauptschiene angeordnet sind, um ein umgekehrtes Falten und Lagern in linker und rechter Richtung der Hauptschienenebene durch Scharnierverbindung zu ermöglichen, wobei ein hinterer Teil der Hauptschiene (a) in der Mitte an der Basis (1) angelenkt ist, wobei ein vorderer Teil der Hauptschiene (a) an der Basis (1) durch das Paar von hydraulischen Ausgleichszylindern (5) und den hydraulischen Hubzylinder (6) angelenkt ist.

8. Abwurfschienenvorrichtung nach Anspruch 1, wobei Zylinderrohre oder Zylinderrohrverlängerungselemente des Paares von hydraulischen Ausgleichszylindern (5) an linken und rechten Positionen der Basis (1) angelenkt sind, wobei Kolbenstangen an oberen Enden des Paares von hydraulischen Ausgleichszylindern (5) an linken und rechten Seiten der Schienen angelenkt sind; wobei ein Zylinderrohr oder ein Zylinderrohrverlängerungselement des hydraulischen Hubzylinders (5) an einer mittleren Position der Basis (1) angelenkt ist, und wobei eine Kolbenstange an einem oberen Ende des hydraulischen Hubzylinders (5) starr an der Schiene (2) angelenkt ist; wobei das Paar von hydraulischen Ausgleichszylindern (5) Doppelstangen-Hydraulikzylinder (5) mit gleichen Zylinderdurchmessern sind, wobei die Kolbendurchmesser der beiden Zylinder (5) und die Kolbenstangendurchmesser vor und hinter dem Kolben gleich sind, wobei Öleinlasslöcher und Ölauslasslöcher in oberen und unteren Teil der Zylinderrohres des Paares von hydraulischen Ausgleichszylindern (5) angeordnet sind, wobei die Öllöcher im unteren Teil der beiden Ölzylindern (5) durch Hydraulikleitungen mit den Öllöchern im oberen Teil des gegenüberliegenden Ölzylinders (5) verbunden sind, um einen geschlossenen Ölkreislauf zu bilden, und wobei das Paar von hydraulischen Ausgleichszylindern (5) eine synchrone Bewegung ausführt.

9. Abwurfschienenvorrichtung nach einem der Ansprüche 1, 6 oder 7, wobei an der Schiene (2) ein Sensor vorgesehen ist.

10. Abwurfschienenvorrichtung nach Anspruch 9, wobei der Sensor ein rotierender digitaler Encoder ist und eine Drehwelle des Codierers mit einer Seilrolle (42) an einem hinteren Teil der Schiene (2) synchronisiert ist oder mit einem Zugseil (28) synchronisiert ist, indem eine zusätzliche Rolle am hinteren Teil der Schiene angeordnet ist.

## Revendications

1. Dispositif de rail de lancement pour un lanceur, comprenant
un siège (1) et
un rail (2) situé sur le siège (1),
dans lequel le rail (2) soit un rail à section unique, soit formée en assemblant une pluralité de sections de rails (a, b, c), dans lequel la pluralité de rails (a, b, c) sont reliées en mode d'articulation bout à bout pour être repliées et stockées dans une direction latérale ou verticale d'un plan de rail ;
une poulie à câbles (3) est prévue à chaque position d'articulation du rail (2) ;
le rail (2) est formé en reliant de manière insérable une plaque supérieure (21), une plaque inférieure (22), une plaque gauche (23) et une plaque droite (24) par soudage,
la plaque supérieure (21), la plaque inférieure (22), la plaque gauche (23) et la plaque droite (24) sont pourvues de trous et de saillies de bord pour l'épissage, et les trous et les saillies sont positionnées de sorte que les plaques individuelles soient assemblées de manière insérable à travers les saillies et les trous et soient fixées par soudage ;
le rail (2) comprend en outre des plaques à nervures (27) qui sont disposées verticalement ou obliquement entre ladite plaque supérieure (21), ladite plaque inférieure (22), ladite plaque gauche (23) et ladite plaque droite (24), et les plaques à nervures (27) sont également reliées de manière insérable dans les plaques individuelles périphériques (21, 22, 23, 24) à travers les trous et les saillies de bord et sont fixées par soudage ;
des extrémités supérieures de la plaque gauche (23) et de la plaque droite (24) sont pourvues de glissières (25) qui sont également reliées de manière insérable à la plaque gauche (23) et à la plaque droite (24) à travers les trous et les saillies de bord et sont fixées par soudage ;
la plaque gauche (23) et la plaque droite (24) sont disposées en parallèle,
la plaque supérieure (21) et la plaque inférieure (22) sont disposées en parallèle ou non parallèle, et
les plaques à nervures (27) sont pourvues perpendiculairement ou en diagonale aux plaques périphériques ;
la plaque supérieure (21), la plaque inférieure (22), la plaque gauche (23), la plaque droite (24) et les plaques à nervures (27) sont toutes pourvues de trous de réduction de poids ;
les extrémités avant et arrière du rail (2) sont pourvues chacune d'au moins une poulie à câbles (3), et
les poulies à câbles (3) sont configurées pour ajuster un câble de traction (28) ;
une partie arrière du rail (2) est articulée au siège (1),
le dispositif de rail de lancement comprend en outre un vérin hydraulique de levage (6) ;
**caractérisé en ce que**,
une paire de vérins hydrauliques d'équilibrage (5) sont articulés de manière coaxiale à deux côtés d'une partie avant du rail (2) par un arbre d'articulation, et les autres extrémités de la paire de vérins hydrauliques d'équilibrage (5) sont également articulés de manière coaxiale à deux côtés du siège (1) ;
la paire de vérins hydrauliques d'équilibrage (5) présentent la même structure et sont disposés de manière symétrique ;
les vérins d'huile de la paire de vérins hydrauliques d'équilibre (5) sont reliés à travers des tuyaux hydrauliques ; et
un circuit d'huile fermé est formé entre la paire de vérins hydrauliques d'équilibrage (5) ;
et dans lequel,
le vérin hydraulique de levage (6) est situé entre la paire de vérins hydrauliques d'équilibrage (5), deux extrémités du vérin hydraulique de levage (6) sont articulées respectivement au rail (2) et au siège (1), le vérin hydraulique de levage (6) lui-même maintient une articulation verticale rigide avec un arbre d'articulation et l'arbre d'articulation du vérin hydraulique de levage (6) coaxial ou parallèle à l'arbre d'articulation de la paire de vérins hydrauliques d'équilibrage (5).

2. Dispositif de rail de lancement selon la revendication 1, dans lequel les trous et les saillies de bord sur le rail (2) qui sont utilisés pour relier de manière insérable les plaques, sont soudés et fixés par soudage à points et soudage court, et dans lequel les positions de soudage résultantes sont isolées les unes des autres

3. Dispositif de rail de lancement selon la revendication 1, dans lequel une plaque de couche intermédiaire supérieure (211) et une plaque de couche intermédiaire inférieure (212) sont également installées entre la plaque supérieure (21) et la plaque inférieure (22) du rail ; la plaque de couche intermédiaire supérieure (211) et la plaque de couche intermédiaire inférieure (212) sont perpendiculaires à la plaque gauche (23) et à la plaque droite (24) et sont disposées selon la direction d'extension de la plaque supérieure (21) et de la plaque inférieure (22) ; la plaque de couche intermédiaire supérieure (211) et la plaque de couche intermédiaire inférieure (212) ainsi que les plaques périphériques (21, 22, 23, 24) sont également épissées à travers les trous et les saillies de bord et sont fixées par soudage.

4. Dispositif de rail de lancement selon la revendication 1, dans lequel les plaques à nervures (27) sont perpendiculaires à la plaque gauche (23) et à la plaque de droite (24).

5. Dispositif de rail de lancement selon la revendication 3, dans lequel les plaques à nervures (27) sont également disposées entre la plaque supérieure (21), la plaque de couche intermédiaire supérieure (211), la plaque gauche (23) et la plaque droite (24) et sont perpendiculaires à chacune des plaques périphériques (21, 22, 23, 24) ; les plaques à nervures (27) sont également disposées entre la plaque de couche intermédiaire inférieure (212), la plaque inférieure (22), la plaque gauche (23) et la plaque droite (24) et sont perpendiculaires à chacune des plaques périphériques (21, 22, 23, 24) ; les plaques à nervures (27) sont également disposées entre la plaque gauche (23), la plaque droite (24), la plaque de couche intermédiaire supérieure (212) et la plaque inférieure (22) et sont perpendiculaires à la plaque gauche (23) et à la plaque droite (24) et sont obliquement reliées à la plaque de couche intermédiaire supérieure (212) et à la plaque inférieure (22) par soudage.

6. Dispositif de rail de lancement selon la revendication 1, dans lequel le rail (2) soit un rail principal, soit un rail principal (a), un sous-rail I (b) et/ou un sous-rail II (c), soit un rail principal (a), un sous-rail I (b) et/ou un sous-rail II (c), un sous-rail III (d) et/ou un sous-rail IV (e) ; le sous-rail I (b) et le sous-rail II (c) sont respectivement reliées par articulation à extrémités avant et arrière du rail principal (a) pour réaliser un repliement latéral et un stockage du sous-rail I (b) et du sous-rail II (c) dans un plan du rail principal ; le sous-rail III (c) est articulé au sous-rail I (b) pour réaliser un repliement vertical et un stockage du sous-rail III (c) autour d'un point d'articulation ; le sous-rail IV est articulé au sous-rail II (c) pour réaliser un repliement vertical et un stockage du sous-rail IV autour du point d'articulation.

7. Dispositif de rail de lancement selon la revendication 6, dans lequel le rail (2) est composé du rail principal, du sous-rail I (b) et du sous-rail II (c), du sous-rail I (b) et du sous-rail II (c) respectivement situées aux extrémités avant et arrière du rail principal pour réaliser un repliement inverse et un stockage dans les directions gauche et droite du plan du rail principal par articulation, une partie arrière du rail principal (a) au milieu est articulée au siège (1), une partie avant du rail principal (a) est articulée au siège (1) à travers la paire de vérins hydrauliques d'équilibrage (5) et le vérin hydraulique de levage (6).

8. Dispositif de rail de lancement selon la revendication 1, dans lequel des corps de vérin ou des portions d'extension du corps de vérin de la paire de vérins hydrauliques d'équilibrage (5) sont articulés à positions gauche et droite du siège (1), des tiges de piston aux extrémités supérieures de la paire de vérins hydrauliques d'équilibrage (5) sont articulées sur les côtés gauche et droit du rail ; un corps de vérin ou une portion d'extension du corps de vérin du vérin hydraulique de levage (5) est articulé à une position médiane du siège (1), et une tige de piston à une extrémité supérieure du vérin hydraulique de levage (5) est rigidement articulée au rail (2) ;
la paire de vérins hydrauliques d'équilibrage (5) sont des vérins hydrauliques à double tige (5) ayant diamètres de vérin identiques, les diamètres de piston des deux vérins (5) et les diamètres des tiges de piston avant et arrière du piston sont identiques, des orifices d'entrée d'huile et des orifices de sortie sont prévus dans les parties supérieure et inférieure des corps de vérin de la paire de vérins hydrauliques d'équilibre (5), les orifices d'huile dans la partie inférieure des deux vérins d'huile (5) sont reliés aux orifices d'huile dans la partie supérieure du vérin d'huile opposé (5) par l'intermédiaire des tuyaux hydrauliques pour former un circuit d'huile fermé, et la paire de vérins hydrauliques d'équilibre (5) effectue un mouvement synchrone.

9. Dispositif de rail de lancement selon l'une quelconque des revendications 1, 6 ou 7, dans lequel un capteur est prévu sur le rail (2).

10. Dispositif de rail de lancement selon la revendication 9, dans lequel le capteur est un codeur numérique rotatif, et un arbre de rotation du codeur est synchronisé avec une poulie à câbles (42) au niveau d'une partie arrière du rail (2), ou synchronisé avec un câble de traction (28) en disposant une poulie supplémentaire au niveau de la partie arrière du rail.
